# EUROPEAN PATENT SPECIFICATION

(11) **EP 2 876 832 B1**
(45) Date of publication and mention of the grant of the patent: **07.10.2020**
(21) Application number: 14193411.7
(22) Date of filing: 17.11.2014
(51) Int. Cl.: H04L 1/00, H04L 1/16, H04L 12/18

(54) **Communication method and apparatus**
Kommunikationsverfahren und Vorrichtung
Appareil et procédé de communication

(30) Priority: 19.11.2013 KR 20130140580
(43) Date of publication of application: 27.05.2015
(73) Proprietor: Samsung Electronics Co., Ltd., Gyeonggi-do 443-742 (KR)
(72) Inventor: Kim, Jae Hoon, 446-712 Gyeonggi-do (KR); Kim, Kwang Taik, 446-712 Gyeonggi-do (KR); Byun, Do Jun, 446-712 Gyeonggi-do (KR); Jang, Kyung Hun, 446-712 Gyeonggi-do (KR); Jang, Myeong Wuk, 446-712 Gyeonggi-do (KR); Han, Kwang Hoon, 446-712 Gyeonggi-do (KR)
(74) Representative: Grünecker Patent- und Rechtsanwälte PartG mbB

(56) References cited:
- WO-A1-2010/117646
- WO-A1-2013/179269
- LACHER M S ET AL: "PERFORMANCE COMPARISON OF CENTRALIZED VERSUS DISTRIBTED ERROR RECOVERY FOR RELIABLE MULTICAST", IEEE / ACM TRANSACTIONS ON NETWORKING, IEEE / ACM, NEW YORK, NY, US, vol. 8, no. 2, 1 April 2000 (2000-04-01), pages 224-238, XP000927607, ISSN: 1063-6692, DOI: 10.1109/90.842144
- JEAN-MARIE VELLA ET AL: "A Survey of Multicasting over Wireless Access Networks", IEEE COMMUNICATIONS SURVEYS AND TUTORIALS, INSTITUTE OF ELECTRICAL AND ELECTRONICS ENGINEERS, US, vol. 15, no. 2, 1 April 2013 (2013-04-01), pages 718-753, XP011508063, ISSN: 1553-877X, DOI: 10.1109/SURV.2012.050412.00095

## Description

### 1. Field

The following description relates to a communication method and a communication apparatus for recovering a loss occurring during communication.

### 2. Description of Related Art

In a wireless networking environment, multicast transmission may not include retransmission as a basic function. Thus, when packets are multicast, a packet loss may occur.

A transmission node possessing content may transmit the content as a plurality of packets. When the plurality of packets is multicast by the transmission node, the packets constituting the content may be lost during the multicast transmission.

To prevent a packet loss, several methods may be used.

In one method, a transmission node may transmit packets using multicast transmission, and verify whether the packets are received by a reception node.

The reception node receiving the packets may transmit, to the transmission node, an acknowledgement (ACK) message to acknowledge the reception of the packets. If the reception node does not transmit the ACK message, the transmission node may determine that the transmission of the packets to the reception node has failed and the packets have been lost. The transmission node may then retransmit the lost packets to the reception node, and the reception node may receive the lost packets.

In another method, a reception node may inform a transmission node that packets have not been received.

The reception node may transmit a negative acknowledgement (NACK) message in lieu of an ACK message. The NACK message may indicate that the packets have not been received by the reception node.

The following documents are prior art which can be regarded as useful to understand the invention:
WO 2013/179269 A1 is prior art under Art. 54(3) EPC;
LACHER M S ET AL: "PERFORMANCE COMPARISON OF CENTRALIZED VERSUS DISTRIBUTED ERROR RECOVERY FOR RELIABLE MULTICAST", IEEE / ACM TRANSACTIONS ON NETWORKING, IEEE / ACM, vol. 8, no. 2, 1 April 2000, pages 224-238; and
JEAN-MARIE VELLA ET AL: "A Survey of Multicasting over Wireless Access Networks", IEEE COMMUNICATIONS SURVEYS AND TUTORIALS, vol. 15, no. 2, 1 April 2013, pages 718-753.

These documents disclose communication methods performed by a node in a network, the methods comprising: receiving a first feedback message related to packet reception from another node in the network, the first feedback message comprising information on a number of packets required by the other node; comparing the number of packets required by the other node with a number of packets required by the node; and transmitting a second feedback message comprising information on the number of packets required by the node in response to the number of packets required by the node being greater than the number of packets required by the other node.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The invention provides a method according to claim 1, a medium storing a program according to claim 10, and a receiving node according to claim 5.

The scope of protection is defined by the appended independent claims. Throughout the description, any references to embodiments and aspects not falling within the scope of those claims are to be regarded as referring to related examples useful to understanding the invention.

In one general aspect, a communication method performed by a node in a network includes receiving a first feedback message related to packet reception from another node in the network, the first feedback message including information on a number of packets required by the other node; comparing the number of packets required by the other node with a number of packets required by the node; and transmitting a second feedback message including information on the number of packets required by the node in response to the number of packets required by the node being greater than the number of packets required by the other node.

The method may further include awaiting the first feedback message during a predetermined period of time; and transmitting the second feedback message in response to the first feedback message not being received within the predetermined period of time.

The method may further include receiving at least one first packet transmitted from the transmission node; and the number of packets required by the node may be a minimum number of packets additionally required to decode the received at least one first packet.

The at least one first packet may be multicast from the transmission node to the node.

Each of the at least one first packet may include a same identifier (ID).

The received at least one first packet may be encoded by network coding; and the number of packets required by the node may be a minimum number of packets additionally required to decode the received at least one first packet encoded by network coding.

The received at least one first packet may be encoded by network coding; and the number of packets required by the node may be a number of at least one second packet encoded by the network coding and additionally required to decode the received at least one first packet encoded by the network coding.

Each of the received at least one first packet may include information on a minimum number of packets required to decode the received at least one first packet.

In another general aspect, a non-transitory computer-readable storage medium stores a program including instructions to control a computer to perform the method described above.

In another general aspect, a node includes a communication unit configured to receive a first feedback message related to packet reception from another node in a network; and a processor configured to compare a number of packets required by the other node with a number of packets required by the node; wherein the first feedback message includes information on the number of packets required by the other node; a second feedback message includes information on the number of packets required by the node; and the communication unit is further configured to transmit the second feedback message in response to the number of packets required by the node being greater than the number of packets required by the other node.

In another general aspect, a communication method performed by a node in a network includes receiving, from another node in the network, a feedback message including information on a number of packets required by the other node; comparing the number of packets required by the other node with a maximum number of packets; and transmitting at least one first packet in response to the number of packets required by the other node being greater than the maximum number of packets.

The method may further include awaiting a feedback message during a predetermined period of time; and transmitting the at least one first packet in response to the feedback message not being received during the predetermined period of time.

The method may further include updating the maximum number of packets with the number of packets required by the other node in response to the number of packets required by the other node being greater than the maximum number of packets; wherein a number of the at least one first packet is a difference between the number of packets required by the other node and the maximum number of packets before the updating.

The method may further include transmitting at least one second packet to at least one reception node including the other node; and the number of packets required by the other node may be a number of packets additionally required in addition to the at least one second packet to decode at least one third packet received by the other node among the at least one first packet.

The at least one second packet may be multicast from the node to the at least one reception node.

Each of the at least one first packet and each of the at least one second packet may include a same identifier (ID).

The at least one first packet and the at least one second packet may be encoded by network coding.

Each of the at least one first packet may include information on a minimum number of packets required to decode the at least one first packet.

In another general aspect, a non-transitory computer-readable storage medium stores a program including instructions to control a computer to perform the method described above.

In another general aspect, a node includes a communication unit configured to receive, from another node in a network, a feedback message including information on a number of packets required by the other node; and a processor configured to compare the number of packets required by the other node with a maximum number of packets; wherein the communication unit is further configured to transmit at least one first packet in response to the number of the packets required by the other node being greater than the maximum number of packets.

In another general aspect, a node includes a communication unit configured to receive any first feedback message transmitted by any other node in a network, the first feedback message requesting additional packets; and a processor configured to generate a second feedback message requesting an additional number of packets required by the node in response to the communication unit not receiving any first feedback message requesting a number of additional packets that is greater than or equal to the additional number of packets required by the node; wherein the communication unit is further configured to transmit the second feedback message.

The processor may be further configured to generate the second feedback message based only on any first feedback message received during a predetermined period of time; and the communication unit may be further configured to transmit the second feedback message after the predetermined period of time has elapsed.

The communication unit may be further configured to receive at least one first packet from a transmission node in the network; and the additional number of packets required by the node may be an additional number of packets required to decode the at least one first packet.

The at least one first packet may be part of a set of first packets obtained by network coding a set of original packets; a number of first packets in the set of first packets may be greater than a number of original packets in the set of original packets; and a number of first packets of the least one first packet received by the communication unit plus the additional number of packets required to decode the at least one first packet may be less than the number of first packets in the set of first packets.

In another general aspect, a node includes a communication unit configured to receive any feedback message transmitted by any other node in a network, the feedback message requesting additional packets; and a processor configured to determine a number of additional packets to be transmitted in response to a number of additional packets requested by any feedback message received by the communication unit exceeding a maximum number of packets; wherein the communication unit is further configured to transmit the determined number of additional packets to be transmitted.

The processor may be further configured to determine the number of additional packets to be transmitted based only on any feedback message received by the communication unit during a predetermined period of time; and the communication unit may be further configured to transmit the number of additional packets to be transmitted after the predetermined period of time has elapsed.

The maximum number of packets may be a total number of additional packets that have previously been transmitted by the communication unit in response to at least one feedback message received by the communication unit.

The node may further include updating the maximum number of packets to include the determined number of additional packets transmitted by the communication unit.

Other features and aspects will be apparent from the following detailed description, the drawings, and the claims.

### BRIEF DESCRIPTION OF THE DRAWINGS

- FIG. 1: illustrates an example of encoding and decoding of packets.
- FIG. 2: illustrates an example of packet loss recovery.
- FIG. 3: illustrates an example of frame loss recovery.
- FIG. 4: illustrates an example of content caching of a reception node.
- FIG. 5: illustrates an example of decoding packets using a cache of content.
- FIG. 6: illustrates an example of an aggregated loss information message.
- FIG. 7: illustrates an example of a node.
- FIG. 8: illustrates an example of a communication method of a reception node.
- FIG. 9: illustrates an example of a communication method of a transmission node.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

Throughout the drawings and the detailed description, the same reference numerals refer to the same elements. The drawings may not be to scale, and the relative size, proportions, and depiction of elements in the drawings may be exaggerated for clarity, illustration, and convenience.

Herein, a "frame" may be transmitted as a "packet". Thus, descriptions referring to "frame" are also applicable to a "packet". For example, the terms "frame transmission" and "packet transmission" may be interchangeable with each other, and the terms "frame loss" and "packet loss" may be interchangeable with each other. The term "coded packet" may refer to a "coded frame", or a "packet including data about a coded frame".

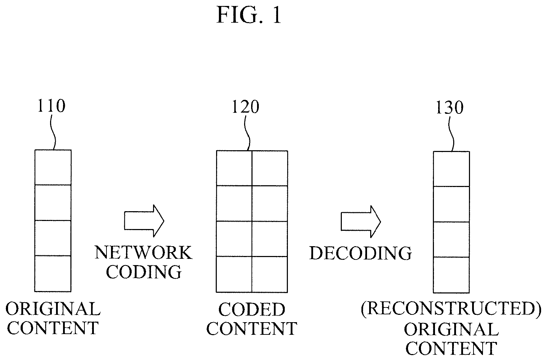

FIG. 1 illustrates an example of encoding and decoding of packets.

A transmission node possessing original content 110 transmits the content 110 to a reception node requesting the content 110. The transmission node may also be referred to as a content source node, a source node, or a source.

Referring to FIG. 1, at least one original frame constitutes the content 110. A frame is illustrated as a rectangle. The content 110 includes the at least one original frame. In the example in FIG. 1, the content includes four original frames.

The transmission node generates coded content 120 by encoding the content 110. The coded content 120 includes at least one coded frame. The encoding may include network coding, for example, matrix network coding (MNC).

MNC is a network coding method that generates new output information by performing a linear combination between original input information and matrix information. The input information may be original frames, and the output information may be coded frames. When frames are transmitted as packets, the input information may be original packets, and the output information may be coded packets.

A number of the generated coded frames may be greater than a number of the original frames. A greater number of coded frames than the number of the original frames may be generated by network coding.

The transmission node may generate a greater number of coded frames than the number of the original frames by performing the linear combination.

The transmission node transmits the coded frames to the reception node.

The reception node generates content using the received coded frames. For example, referring to FIG. 1, the reception node reconstructs original content 130 using the received coded frames 120. The reception node reconstructs the original content 130 by decoding the coded frames 120.

The transmission and the generation may be performed based on a block unit. At least one block may constitute content. That is, the content may include at least one block. The original frames described above may be frames of a single block of content. Each of the original content 110 and the reconstructed original content 130 may be a single block of content. Original frames of the entire content may be classified into at least one original frame for each block.

At least one coded frame may be a single block of content. The at least one coded frame may be frames generated by encoding frames of a single block of content.

The coded frames may have an identifier (ID) for each block. The ID may be a block ID assigned to each block. The ID may be data to be used to identify a block to which a coded frame belongs. For example, when a coded frame is generated by network coding, the generated frame may include an ID to be used to identify a block to which the generated frame belongs.

Thus, coded frames belonging to the same block may have the same ID. A common ID of coded frames of a single block may include data that indicates the corresponding block. The data that indicates the corresponding block may include an order of the corresponding block.

In general, items of data indicating the block may sequentially increase or sequentially decrease. For example, an ID of a predetermined block may indicate an order of the predetermined block in the content.

The reception node may identify frames having the same ID, among the received frames, as coded frames belonging to a block indicated by the ID.

The reception node may receive a minimum number of coded frames to be used, among frames coded based on a block unit, and reconstruct original frames constituting the corresponding block using the received coded frames. The minimum number of coded frames may be greater than a number of the original frames.

Packets may be transmitted and received for data transmission between nodes in a wireless network. A packet may include a frame of content. A frame of content may be transmitted between nodes as a packet.

When a packet is unicast or multicast, the packet may be lost during the unicast transmission or the multicast transmission. A frame of content may be lost during transmission. In the following examples, methods that provide fast packet loss recovery will be described.

For example, the recovery may be performed in response to a request for retransmission for each block based on a new ID. When a frame is determined to be lost, the reception node may request the transmission node to transmit another corresponding frame to the reception node. The requested corresponding frame may correspond to a frame having the same ID as the frame of the lost packet. The request for retransmission of the packet or the frame may be based on an ID of the frame.

The ID may refer to an ID used for network coding or an ID used for MNC.

Since the request for retransmission is based on the ID, another reception node present in the wireless network and possessing the corresponding content or frame may also transmit the corresponding frame, in addition to the transmission node that transmitted the original frame.

In a case in which a plurality of reception nodes do not receive packets or the wireless network is a multi-hop wireless network, the packets not received by the reception nodes, for example, lost packets of the reception nodes, may differ from one another. For example, types of the lost packets may differ from one another, and packet loss rates of the reception nodes may differ from each other. In this example, when each reception node requests retransmission based on an ID, frames may be provided by a source node and an ambient reception node. Mutual supplementation among reception nodes may be implemented.

In the following examples, various IDs may be utilized.

For example, the ID may include data about a service of the wireless network. The data about the service of the wireless network may include data to be used to indicate a transmission control protocol (TCP) port or a user datagram protocol (UDP) port.

In a case in which internet protocol (IP)-based communication is performed in the wireless network, the ID may include an address and/or a port number of a source node, or may include a media access control (MAC) address and a port number of a source node.

In a case in which a content name-based network protocol is used in the wireless network, the ID may include a name of content.

The following examples are applicable to various ID-based networking protocols.

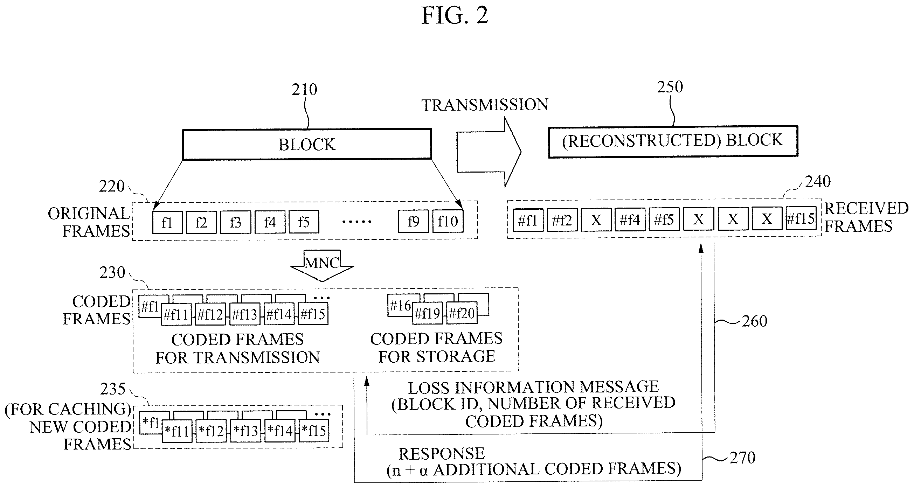

FIG. 2 illustrates an example of packet loss recovery.

A block of content includes at least one original frame. Referring to FIG. 2, an original block 210 includes ten original frames 220. The original frames 220 are denoted by f1 through f10.

A transmission node generates a greater number of coded frames than a number of the original frames by performing network coding on the original frames. In the example in FIG. 2, the transmission node generates twenty coded frames 230 by performing network coding on the ten original frames 220. The coded frames 230 are denoted by #f1 through #f20.

The coded frames are classified into coded frames for transmission, and coded frames for storage. The coded frames include the coded frames for transmission, and the coded frames for storage. For example, the coded frames for transmission are denoted by #f1 through #f15, and the coded frames for storage are denoted by #f16 through #f20. The coded frames for transmission may be different from the coded frames for storage, as they are in the example in FIG. 2.

The transmission node transmits the coded frames to a reception node. Each of the coded frames may be transmitted as a packet. The generation and the transmission of the coded frames may be performed based on a block unit. The frames transmitted to the reception node may be limited to the coded frames for transmission among the coded frames.

When the coded frames are transmitted through a wireless network, a portion or all of the coded frames may not be received by the reception node, and may be lost. For example, among the twenty coded frames 230, only a first coded frame #f1, a second coded frame #f2, a fourth coded frame #f4, a fifth coded frame #f5, and a fifteenth coded frame #15 are received by the reception node, and the remaining frames denoted by a symbol "X" are lost.

Based on characteristics of network coding, the reception node may reconstruct a block of the original frames or all of the original frames using a predetermined portion of the coded frames even though not all of the coded frames are received. For example, the reception node may reconstruct the ten original frames 220 using ten of the coded frames 230. The reception node may need at least ten of the coded frames 230 to reconstruct the original frames 220. A minimum number of the coded frames 230 required to reconstruct the original frames 220 may be ten. When ten of the coded frames 230 are received for each block, the reception node may generate a reconstructed block 250 using the received coded frames 240.

Unless packet loss recovery is performed when packets are multicast, a transmission reliability may not be guaranteed. As described above, when network coding is used, a success rate of packet transmission may increase.

In a wireless network, a serious packet loss may occur. Thus, the reception node may not receive a minimum number of coded frames required to reconstruct the original frames. In the example in FIG. 2, the reception node receives five of the twenty coded frames 230. The received frames 240 include the first coded frame #f1, the second coded frame #f2, the fourth coded frame #f4, the fifth coded frame #f5, and the fifteenth coded frame #15.

In a case in which the reception node does not receive the minimum number of coded frames required to reconstruct the original frames, the reception node cannot reconstruct the block or the original frames.

To reconstruct the block or the original frames, the reception node may need to obtain additional coded frames. To obtain the additional coded frames, the reception node may request the transmission node to retransmit the coded frames.

To request retransmission, the reception node may transmit a loss information message that indicates loss information to the transmission node. The term "request for retransmission" may be used interchangeably with "transmission of a loss information message to request retransmission". The loss information message may be a feedback from the reception node on the transmission of the coded frames.

The loss information message may include an actual number of coded frames received by the reception node. The loss information message may include a number of coded frames additionally required by the reception node to reconstruct the block or the original frames. The loss information message may include a number of lost frames of the reception node.

The loss information message may include an ID of a block of coded frames. Using the ID, the transmission node may identify a block of coded frames of which information corresponds to loss information included in the loss information message. For example, a loss information message 260 includes an ID of the block 210, and a number of the received coded frames 240.

In a general IP or MAC, lost frames may need to be retransmitted for frame loss recovery. However, to recover a loss of coded frames generated by network coding, coded frames other than the lost coded frames may be used. The reception node may reconstruct the block or the original frames using the previously transmitted coded frames and the additionally transmitted coded frames. The other coded frames may be substituted for the lost coded frames. Through the substitution, the retransmission mechanism may be simplified and a request for retransmission of the coded frames may be reduced.

The transmission node may respond to the request for retransmission. The response may be transmission of additional coded frames. For example, a response 270 includes n + α additional coded frames. As described above, the loss information message may include a number of the coded frames additionally required by the reception node to reconstruct the block or the original frames. A loss may also occur during the transmission of the additional coded frames. The transmission node may transmit, to the reception node, a greater number of coded frames than the number of the additionally required coded frames. The transmission node may transmit, to the reception node, a greater number of additional coded frames than a number of lost frames. In the response 270, n denotes the number of the coded frames additionally required to reconstruct the block or the original frames, and α denotes a number of the coded frames added by the transmission node in anticipation of a loss during transmission.

To respond to a request for retransmission, the transmission node may store the coded frames after the coded frames have been transmitted. The term "store" may refer to "temporarily store". The transmission node may temporarily store all of the coded frames, and decrease a number of the stored coded frames over time. For example, the transmission node may store a minimum number of coded frames after a loss information message is received from the reception node. The transmission node may store the minimum number of the coded frames at a point in time at which a loss information message is expected to be received from the reception node.

In response to a retransmission, the coded frames previously obtained by the reception node may be excluded from retransmission because retransmission of the previously obtained coded frames may not affect reconstruction of the block. Thus, retransmission of coded frames that have been successfully transmitted may need to be prevented.

As illustrated in FIG. 2, the transmission may classify the coded frames into coded frames for transmission and coded frames for storage to prevent retransmission of previously transmitted coded frames. The transmission node may transmit the coded frames for transmission to the reception node when initially transmitting coded frames, and transmit the coded frames for storage to the reception node when responding to the request for retransmission. Thus, it may be guaranteed that coded frames to be additionally transmitted in response to a request for retransmission differ from the coded frames previously received by the reception node.

In a case in which a plurality of coded frames is lost, the coded frames for storage may be insufficient to provide all of the additionally required coded frames. The transmission node may generate new coded frames by performing network coding on the original frames. The new coded frames may be different from the existing coded frames. For example, new coded frames 235 are denoted by *f1 through *f15.

The new coded frames may be temporary frames for caching. The transmission node may use the new coded frames as additional coded frames to be transmitted to respond to the request for retransmission.

As described above, the generation and the transmission of the coded frames may be performed in a block unit. With respect to at least one block included in content, the transmission node may store coded frames for each of the at least one block.

The transmission node may store a different number of coded frames for each of the at least one block. For example, the transmission node may store a greater number of coded frames for a block transmitted later.

The transmission node may store only a minimum number of coded frames for each of the at least one block. By storing a minimum number of frames, the transmission node may store coded frames for a maximum number of blocks, and provide loss recovery for a maximum number of blocks.

The transmission node may transmit, to the reception node, a portion of the coded frames based on a packet loss rate. For example, when two of twelve packets are lost during transmission on average, the transmission node may transmit twelve of twenty coded frames to the reception node, and store remaining eight coded frames for a response to a request for retransmission. The stored coded frames may be used for loss recovery. The transmission node may transmit fifteen of the twenty coded frames to the reception node, and store the remaining five coded frames. In a case in which the packet loss rate is 60%, the reception node may receive six coded frames. The transmission node may transmit the stored remaining five coded frames to the reception node as a response to a request for retransmission.

The transmission node may store a greater number of coded frames according to the packet loss rate. That is, the greater the packet loss rate, the greater the number of coded frames the transmission node stores.

A response to a request for retransmission may be delayed. The transmission node may not immediately respond to the request for retransmission. The transmission node may delay the response to the request for retransmission based on predetermined conditions. When there is at least one reception node, requests for retransmission may be transmitted from the at least one reception node. By delaying the response, the plurality of requests for retransmission may be aggregated.

When requests for retransmission are transmitted from the at least one reception node, the transmission node may not perform repeated transmission during a predetermined period of time after retransmission is performed.

In the above-described example, hop-by-hop retransmission or end-to-end retransmission is not used for packet loss recovery. The transmission node or the reception node may perform tasks required for packet loss recovery using IDs of coded frames.

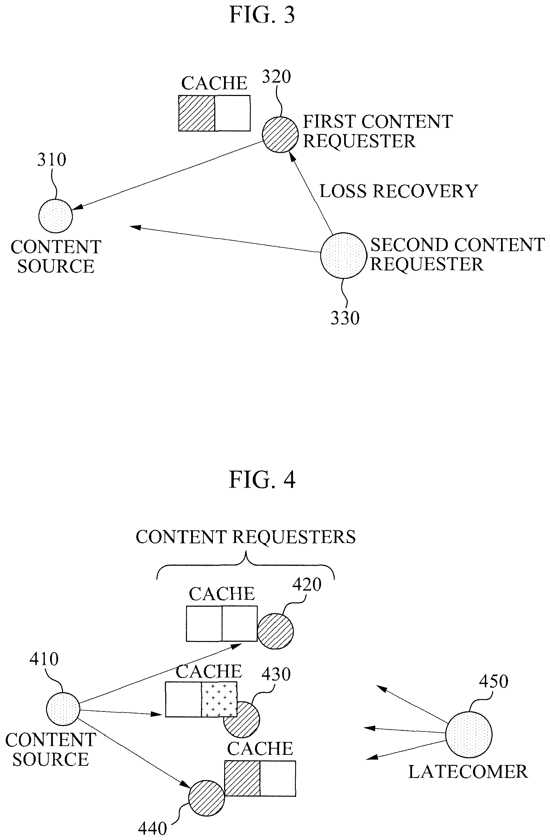

FIG. 3 illustrates an example of frame loss recovery.

A network includes at least one node. At least one reception node receives packets. A transmission node transmits coded frames of a block of content to the at least one reception node. For example, the coded frames may be multicast to a plurality of reception nodes.

Referring to FIG. 3, a content source 310 may correspond to the transmission node described with reference to FIGS. 1 and 2. A first content requester 320 and a second content requester 330 may correspond to at least one reception node. Each of the at least one reception node may correspond to the reception node described with reference to FIGS. 1 and 2.

When a plurality of reception nodes are provided, the transmission node may receive duplicated loss information messages from the plurality of reception nodes with respect to a single block. The transmission node may receive the loss information messages from the plurality of reception nodes.

The content source 310 may receive respective loss information messages from the first content requester 320 and the second content requester 330.

When a loss of coded frames or packets is sensed, the reception node may request the transmission node to retransmit the frames or the packets. The reception node may transmit a request for retransmission, for example, a loss information message, to the transmission node. The request for retransmission may be multicast or unicast. When the request for retransmission is multicast, the request for retransmission may be received by the transmission node and other nodes in the network, for example, another reception node, and a neighbor node of the reception node. When the request for retransmission is unicast, the request for retransmission may be received by the other node through overhearing. Although the other node is not a designated receiver of the request for retransmission, the other node may receive the request for retransmission by performing overhearing with respect to transmission and reception performed in the network.

The other node receiving the request for retransmission may also respond to the request for retransmission. The other node may transmit additional coded frames to the reception node. When the transmission node and the other node transmit coded frames generated by network coding using different matrices, respectively, the reception node may reconstruct the original frames at a higher success rate.

In a cache of the first content requester 320 corresponding to a reception node, only half of the coded frames required to reconstruct the original frames may be stored. For example, a number of the coded frames required to reconstruct the original frames may be 2, and a number of the coded frames stored by the first content requester 320 may be 1. The first content requester 320 may transmit a request for retransmission to the content source 310 corresponding to a transmission node. The second content requester 330 receiving the request for retransmission through multicast transmission or overhearing may transmit the coded frames required for loss recovery to the first content requester 320. For example, the coded frames required for loss recovery may correspond to coded frames to be transmitted from the second content requester 330 corresponding to another reception node to the first content requester 320 having transmitted a request for retransmission.

The transmission node may not immediately respond to the request for retransmission, thereby decreasing a number of coded frames or packets to be transmitted in the network. For example, when the request for retransmission is transmitted within a predetermined period of time, the transmission node may not immediately respond to the request for retransmission to prevent repeated requests for retransmission, and may delay the response based on a predetermined configuration.

When a number of lost coded frames indicated by a first loss information message being received is less than a number of lost coded frames indicated by a second loss information message previously received, the transmission node may ignore a request for retransmission in the first loss information message. When the number of lost coded frames indicated by the first loss information message being received is greater than the number of lost coded frames indicated by the second loss information message previously received, the transmission node may transmit additional coded frames. In this example, a number of the additional coded frames to be transmitted may be a value obtained by subtracting a number of the additionally required coded frames indicated by the second loss information message from a number of the additionally required coded frames indicated by the first loss information message. The transmission node may determine a number of coded frames to be transmitted in response to the first loss information message based on a number of coded frames previously transmitted in response to the second loss information message. The transmission node may determine, as a number of coded frames to be transmitted, a value obtained by subtracting a number of coded frames transmitted in response to a previous loss information message from a number of coded frames requested by a recent loss information message.

Prevention of repeated transmission of coded frames through a delayed response may be performed in response to a request for retransmission occurring within a predetermined period of time. The predetermined period of time may be a time to prevent repeated transmission based on a routing trip time.

The transmission node may respond to a request for retransmission received after the predetermined period of time elapses. For example, although the reception node does not receive multicast traffic continuously, the transmission node may recover the lost coded frames.

The response delay may be performed differently based on attributes or types of original frames and coded frames, content, and applications.

For example, in a case in which the content is a file, multicast may be performed to transmit the file in the network. In this example, the transmission node may respond to a request for retransmission after the entire file or all blocks of the file have been transmitted. The transmission node may be set to delay a response until the entire file or all blocks of the file have been transmitted.

The transmission node may be set to delay a response until predetermined conditions have been satisfied. For example, the transmission node may be set to perform periodic retransmission.

For periodic retransmission, the transmission node may delay the response until a predetermined quantity of blocks or a number of blocks have been transmitted. The transmission node may delay the response based on a predetermined period. The transmission node may respond to a request for retransmission based on the predetermined period. The transmission node may delay the response until traffic in the network is less than a predetermined threshold.

As described above, by delaying a response, the transmission node may collectively perform retransmission for packet loss recovery. Through the collective performance of retransmission, an effect of multicast may increase.

FIG. 4 illustrates an example of content caching of a reception node.

As described with reference to FIG. 3, similar to a transmission node, each of at least one reception node may also store a portion of transmitted coded frames.

A node in a network may store all or a portion of transmitted coded frames to provide the stored coded frames to another node. The term "store" may refer to "temporarily cache".

Referring to FIG. 4, a content source 410 and at least one content requester are illustrated as nodes in a network. The at least one content requester includes a first content requester 420, a second content requester 430, and a third content requester 440. In addition, a latecomer 450 added to the network later is illustrated. The content source 410 may correspond to the transmission node described with reference to FIGS. 1 through 3. Each of the first content requester 420, the second content requester 430, the third content requester 440, and the latecomer 450 may correspond to the reception node described with reference to FIGS. 1 through 3.

Among the at least one reception node in the network, a reception node that receives content, a block, or coded frames may store the coded frames after original frames, the block, or the content is reconstructed. The term "store" may refer to "cache". For example, the reception node may discard coded frames stored for a relatively long period of time, or coded frames requested relatively long before over time, and store new coded frames.

The storage may be performed for each block. The reception node may store all or a portion of coded frames of a predetermined block.

In storing a portion of the coded frames, the reception node may select a portion of the coded frames of the block at random, and store the selected portion of the coded frames. The at least one reception node may select a portion of the coded frames based on predetermined conditions. The predetermined conditions may be conditions to reduce or prevent duplication in storing coded frames among the at least one reception node. For example, the reception node may select a portion of the coded frames based on an ID of the reception node. The at least one reception node may select a portion of the coded frames to be stored by the at least one reception node through a protocol.

Coded frames may be distributed and stored among the nodes in the network including the transmission node and the at least one reception node. In a case in which a request for retransmission is transmitted, for example, when a single reception node requests retransmission, the transmission node and other neighbor reception nodes receiving the request for retransmission may transmit stored coded frames to the reception node requesting retransmission. The request for retransmission may be multicast to another reception node. Another reception node may overhear a request for retransmission that is unicast from the reception node. Distributed storage and distributed transmission of the coded frames may increase a transmission performance.

The latecomer 450 may receive coded frames from the at least one content requester and the content source 410. The latecomer 450 may receive additional coded frames from the at least one content requester and the content source 410 in response to the request for retransmission.

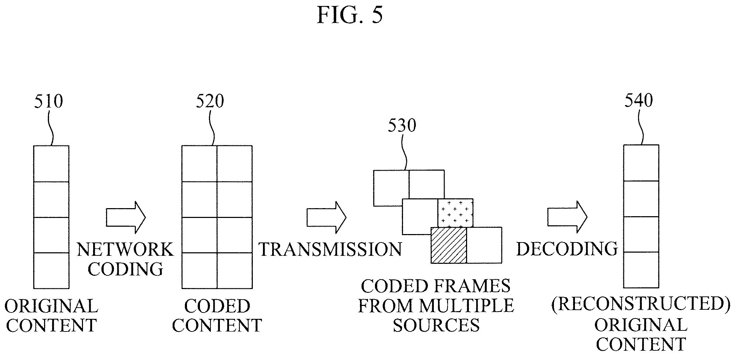

FIG. 5 illustrates an example of decoding packets using a cache of content.

Referring to FIG. 5, at least one original frame constitutes original content 510. The content 510 includes at least one original frame.

As described with reference to FIG. 1, a transmission node may generate coded content 520 by performing encoding, for example, network coding, on the content 510. The coded content 520 includes at least one coded frame.

A reception node generates content using coded frames received from multiple sources. For example, the reception node may reconstruct original content 540 using coded frames 530 received from the multiple sources.

The multiple sources may include the transmission node. As described with reference to FIG. 4, in a case in which the transmission node multicasts the request for retransmission, or other nodes overhear the request for retransmission, the transmission node and one or more other reception nodes in the network or other nodes possessing the coded frames may transmit additional coded frames to the reception node. Thus, the multiple sources may include the one or more other reception nodes in the network. The multiple sources may include one or more other nodes possessing the coded frames in the network.

The coded frames received from the multiple sources may be coded frames of coded content transmitted from the transmission node, the one or more other reception nodes, or the one or more other nodes possessing the coded frames.

The reception node may generate content using the previously received coded frames and the received additional coded frames. For example, the original content 540 may be reconstructed using the coded frames 530 received from the multiple sources. The reception node may reconstruct the original content 540 by decoding the coded frames 530 received from the multiple sources.

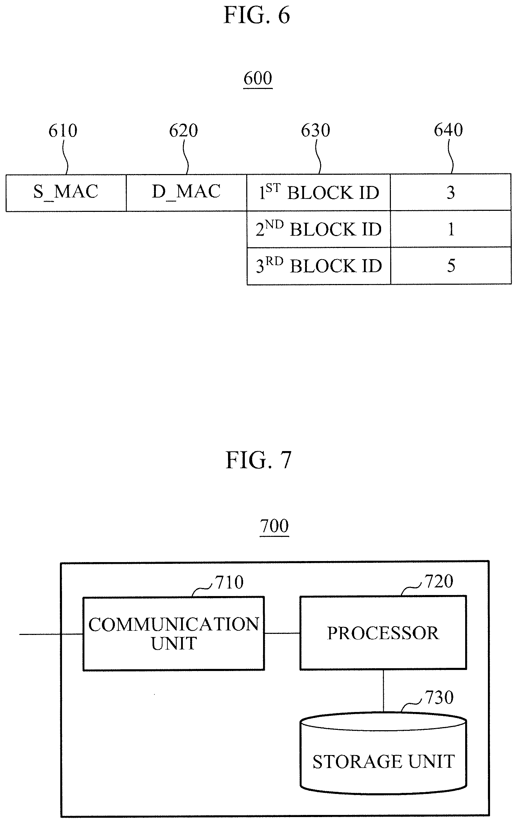

FIG. 6 illustrates an example of an aggregated loss information message.

As described with reference to FIGS. 1 through 5, a request for retransmission may be transmitted through a loss information message. The loss information message may correspond to a single block, and may include an ID of the corresponding block.

Referring to FIG. 6, the loss information message may be an aggregated loss information message 600 corresponding to a plurality of blocks. The aggregated loss information message 600 includes an S_MAC field 610, a D_MAC field 620, at least one block ID field 630, and at least one count field 640. The S_MAC field 610 indicates a MAC address of a source. The source may be the transmission node described with reference to FIGS. 1 through 5. The D_MAC field 620 indicates a MAC address of a destination. The destination may be the reception node described with reference to FIGS. 1 through 5. The block ID field 630 indicates IDs of blocks. The count field 640 indicates a number of additionally required coded frames.

The reception node may aggregate requests for retransmission, rather than immediately transmitting a request for retransmission with respect to a single block. The aggregation may decrease traffic occurring in the network.

The aggregated loss information message indicates loss information about at least one block. The aggregated loss information message may correspond to a loss map including loss information about at least one block collected by the reception node.

The aggregated loss information message may include an actual number of coded frames received by the reception node with respect to each of the at least one block. The aggregated loss information message may include a number of coded frames additionally required by the reception node to reconstruct a block or original frames with respect to each of at least one block. The aggregated loss information message may include a number of lost frames of the reception node with respect to each of at least one block.

The aggregated loss information message may include IDs of at least one block of coded frames. Using the IDs, the transmission node may identify blocks of coded frames of which information corresponds to loss information included in the aggregated loss information message.

The aggregated loss information message may include a counter of coded frames of each of at least one block. The counter of the coded frames may correspond to 1) an actual number of coded frames of each block received by the reception node, 2) a number of coded frames of each block additionally required by the reception node to reconstruct each block, or 3) a number of lost frames of the reception node, among the coded frames of each block.

A range of aggregation may change based on attributes or types of the original frames, the coded frames, and the content.

For example, in a case in which the content corresponds to a file, loss information may be aggregated with respect to all blocks of the content. The reception node may generate and transmit an aggregated loss information message after the entire file has been transmitted. Through temporal separation between transmission of the coded frames and transmission of the aggregated loss information message, the reception node may prevent multicast transmission of the coded frames from being interrupted by transmission of a request for retransmission and transmission of additional coded frames in response to the request for retransmission. The interruption may include any one or any combination of competition, collision, and interference.

For example, in a case in which the content is a streamable video, a range of aggregation of loss information may be determined based on an encoding rate of the video and a transmission rate of the network.

The range of the aggregation may be determined based on points in time at which blocks of the aggregated loss information message are transmitted. For example, when aggregated loss information messages include loss information with respect to a plurality of sequential blocks, the range of the aggregation may be determined to include a plurality of blocks to be transmitted within a predetermined period of time.

FIG. 7 illustrates an example of a node 700.

The node 700 may correspond to the node, the transmission node, or the reception node in the network described with reference to FIGS. 1 through 6. Thus, the descriptions of the node, the transmission node, and the reception node provided with reference to FIGS. 1 through 6 are also applicable to the node 700 and will not be repeated for conciseness and ease of description.

Referring to FIG. 7, the node 700 includes a communication unit 710, a processor 720, and a storage unit 730. Each node in the network described with reference to FIGS. 1 through 6 may include a communication unit, a processor, and a storage unit.

The communication unit 710 transmits and receives data. For example, the communication unit 710 may transmit coded frames and a request for retransmission to another node. The communication unit 710 may receive coded frames and a request for retransmission from another node.

The processor 720 processes tasks associated with generation and determination of data. For example, the processor 720 may generate coded frames and a loss information message, and reconstruct original content by decoding the coded frames.

The storage unit 730 stores data. For example, the storage unit 730 may store content, original frames, generated coded frames, received coded frames, additional coded frames, and a loss information message.

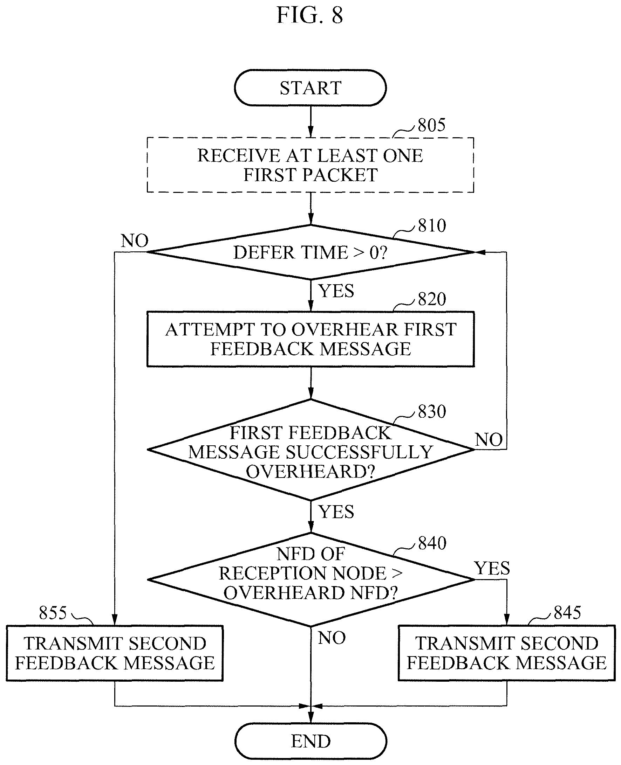

FIG. 8 illustrates an example of a communication method of a reception node.

Hereinafter, the communication method of the reception node will be described. Each of the reception node and another node described below may correspond to the node 700 of FIG. 7. A communication unit, a processor, and a storage unit of the reception node may respectively correspond to the communication unit 710, the processor 720, and the storage unit 730 of the node 700. A communication unit, a processor, and a storage unit of the other node may also respectively correspond to the communication unit 710, the processor 720, and the storage unit 730 of the node 700.

The other node may be a neighbor node present in the same network in which a transmission node is present. The other node and the reception node may receive coded frames from the transmission node. Hereinafter, a feedback message from the other node will be referred to as a first feedback message, and a feedback message from the reception node will be referred to as a second feedback message.

In operation 805, the communication unit of the reception node receives at least one first packet from the transmission node. The at least one first packet may correspond to the coded frames described with reference to FIGS. 1 through 7.

The at least one first packet may be multicast from the transmission node to the reception node.

Operations 810 through 855 correspond to a process in which the reception node requests retransmission of lost packets. In a case in which additional packets are multicast, in a case in which transmission of additional packets is overheard, or in a case in which a node other than the reception node in the network requests packets, the reception node may also receive the additional packets. Thus, the reception node may defer a request for retransmission.

In operation 810, the processor of the reception node determines whether a defer time is greater than 0. The defer time is a waiting time before the reception node transmits a second feedback message.

The second feedback message corresponds to the request for retransmission, the loss information message, or the aggregated loss information message described with reference to FIGS. 1 through 6. The second feedback message is a message including information on a number of packets required by the reception node. The information on the number of required packets is loss information.

The number of packets required by the reception node may be a minimum number of packets additionally required to decode the received at least one first packet.

The second feedback message may include a packet error rate (PER). The PER provides an error rate in packet transmission to the transmission node. The transmission node may transmit additional packets in addition to the number of packets required by the reception node based on the error rate.

As described with reference to FIGS. 1 through 6, packets or coded frames may be generated by the transmission node through network coding of original frames. Thus, the decoding may be decoding the network coding performed on the received at least one first packet.

The number of packets required by the reception node may be a number of at least one second packet encoded by the network coding and additionally required to decode the received at least one first packet encoded by the network coding.

The defer time may be a remaining time of the waiting time during which the request for retransmission described with reference to FIGS. 1 through 7 is not immediately transmitted. The processor of the reception node may delay transmission of a second feedback message until the defer time has elapsed. Before operation 810 is performed, the defer time may be set to be a predetermined value.

In a case in which the defer time is greater than 0, operation 820 is performed. In a case in which the defer time is less than or equal to 0, operation 855 is performed.

In operation 820, the processor and the communication unit of the reception node attempt to overhear a first feedback message. Overhearing a first feedback message is receiving a first feedback message transmitted from another node in a network. For example, in a case in which a first feedback message is multicast from another node to the transmission node, or in a case in which the reception node overhears a first feedback message, the reception node may obtain the first feedback message.

The first feedback message includes information on a number of packets required by the other node. The information on the number of required packets is loss information.

In operation 830, the processor of the reception node determines whether a first feedback message has been successfully overheard, that is, whether a first feedback message transmitted by another node has been received by reception node.

In a case in which it is determined that a first feedback message has been successfully overheard, operation 840 is performed. In a case in which it is determined that a first feedback message has not been successfully overheard, operation 810 is repeated.

In operation 840, the processor of the reception node determines whether a number for decoding (NFD) of the reception node is greater than an overheard NFD.

The NFD of the reception node indicates the number of packets required by the reception node. The overheard NFD indicates a number of packets required by another reception node transmitting a first feedback message that has been overheard. The processor of the reception node compares the number of packets required by the other node with the number of packets required by the reception node.

When a number of packets equal to the NFD of the reception node are additionally received, the reception node may reconstruct the content, the block, or the original frames by decoding the additionally received packets and the previously received at least one first packet. When a number of packets equal to the overheard NFD are additionally received, the other node may reconstruct the content, the block, or the original frames by decoding the additionally received packets.

In a case in which the NFD of the reception node is greater than the overheard NFD, operation 845 is performed.

In a case in which the NFD of the reception node is less than or equal to the overheard NFD, the communication method of the reception node is terminated. In a case in which the NFD of the reception node is less than or equal to the overheard NFD, the reception node does not transmit a second feedback message. A first feedback message being overheard by the reception node indicates that another node transmitted the first feedback message to the transmission node. The first feedback message transmitted from the other node includes information on a number of packets required by the other node. Thus, the transmission node transmits, to the other node and the reception node, at least a number of packets corresponding to the number of packets required by the other node, which is greater than or equal to the number of packets required by the reception node. The transmission may be multicast transmission. Thus, the reception node does not need to transmit the second feedback message.

When the number of packets required by the reception node is greater than the number of packets required by the other node, the communication unit of the reception node transmits the second feedback message to the transmission node in operation 845. The second feedback message may be transmitted to other nodes in the network through multicast transmission or overhearing. As described above, the second feedback message includes information on the number of packets required by the reception node.

In contrast to FIG. 8, in a case in which it is determined in operation 840 that the NFD of the reception node is greater than the overheard NFD, operation 810 may be repeated. Thus, the overhearing of the first feedback message in operations 820 and 830 may be NFD-based overhearing.

When a first feedback message is not received within a predetermined period of time, that is, when the defer time is less than or equal to 0 in operation 810, the communication unit of the reception node transmits the second feedback message to the transmission node in operation 855. The second feedback message may be transmitted to other nodes in the network through multicast transmission or overhearing.

The predetermined period of time may be an initial value of the defer time mentioned in operation 810.

The processor of the reception node awaits a first feedback message during the predetermined period of time. The processor transmits the second feedback message only in a case in which the second feedback message is to be transmitted because the reception node requires a largest number of packets as a result of analyzing the received first feedback message. The feedback of the reception node may be suppressed based on an NFD. The suppression may be performed based on a block unit. The suppression may be performed on packets having the same ID or coded frames having the same block ID.

As described with reference to FIGS. 1 through 7, coded frames for each of at least one block are transmitted. A coded frame has a block ID to indicate a block to which the coded frame belongs. The at least one first packet received by the reception node may have the same ID. The same ID may be a block ID to be used to classify packets for each block. Through IDs, received packets may be classified based on a block unit. Through the classification, the processor of the reception node may perform the aforementioned feedback suppression for each block.

To determine an NFD, each of the received at least one first packet includes information on a minimum number of packets required to decode the received at least one first packet. The processor may calculate a number of packets required by the reception node by subtracting an actual number of the received at least one first packet from the minimum number of required packets.

While operations 810 through 855 are being performed, or after operation 855 has been performed, the reception node may receive additional packets. A number of the additional packets transmitted through the network may be greater than or equal to the number of packets required by the reception node.

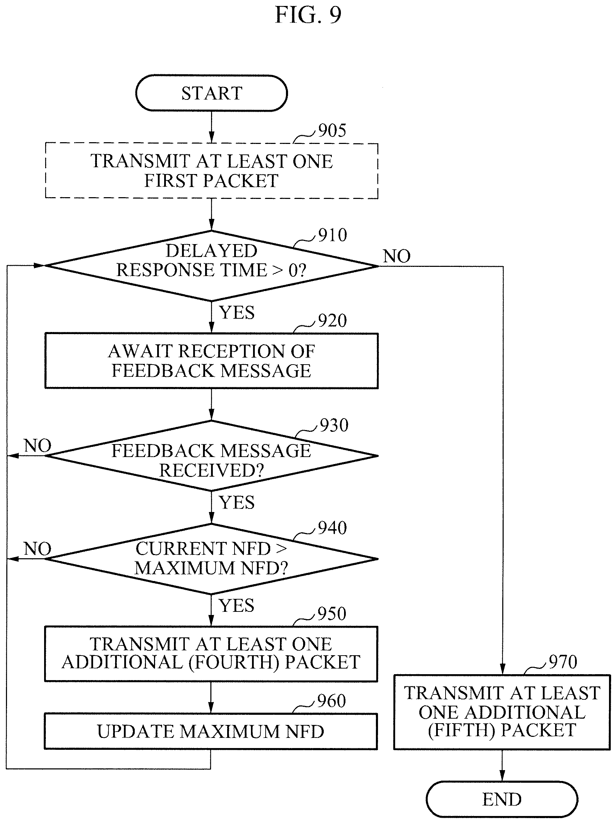

FIG. 9 illustrates an example of a communication method of a transmission node.

Hereinafter, the communication method of the transmission node will be described. Each of the transmission node and another node described below may correspond to the node 700 of FIG. 7. A communication unit, a processor, and a storage unit of the transmission node may respectively correspond to the communication unit 710, the processor 720, and the storage unit 730 of the node 700. A communication unit, a processor, and a storage unit of the other node may also respectively correspond to the communication unit 710, the processor 720, and the storage unit 730 of the node 700.

The other node may be a neighbor node present in the same network in which a reception node is present. The other node may receive coded frames from the transmission node. The other node may correspond to the reception node described with reference to FIGS. 1 through 8.

A packet may correspond to a coded frame described with reference to FIGS. 1 through 8.

When a request for retransmission is received from the reception node, the transmission node transmits, to the reception node, at least a number of additional packets required by the reception node. In a case in which the additional packets are multicast, or in a case in which the additional packets are overheard, nodes other than the reception node that transmitted the request for retransmission may receive the additional packets. Thus, the transmission node may receive requests for retransmission from a plurality of reception nodes, rather than immediately transmitting a response to the request for retransmission during a predetermined period of time. After the requests for retransmission are received, the transmission node may transmit, to the reception nodes, additional packets corresponding to a number of packets determined based on a request for a greatest number of additional packets. The transmission may be multicast transmission.

In operation 905, the communication unit of the transmission node transmits at least one packet to at least one reception node. The at least one packet transmitted in operation 905 may be referred to as at least one first packet.

The at least one first packet may be multicast from the transmission node to the at least one reception node.

Operations 910 through 970 correspond to a process in which the transmission node receives feedback messages from the reception nodes, and transmits additional packets greater than a number of packets required by the reception nodes indicated by the feedback messages.

In operation 910, the processor of the transmission node determines whether a delayed response time is greater than or equal to 0.

The delayed response time is a waiting time remaining before additional packets are transmitted by the transmission node. Before operation 910 is performed, the delayed response time may be set to be a predetermined value.

In a case in which the delayed response time is greater than 0, operation 920 is performed. The delayed response time being greater than 0 indicates that the transmission node needs to wait before transmitting the additional packets.

In a case in which the delayed response time is less than or equal to 0, operation 970 is performed.

In operation 920, the processor and the communication unit of the transmission node await a reception of a feedback message from another node in the network. The other node may be one of the at least one reception node mentioned in the description of operation 905.

The feedback message may be unicast or multicast to the transmission node.

In operation 930, the communication unit of the transmission node determines whether a feedback message has been received from another node. The feedback message includes information on a number of packets required by the other node.

In a case in which it is determined that a feedback message transmitted from another node has not been received, operation 910 is repeated. In this example, operations 920 and 930 performed as long as the delayed response time is greater than 0, that is, during a predetermined period of time. Thus, the processor and the communication unit of the transmission node may await a feedback message from another node during the predetermined period of time.

In a case in which it is determined that a feedback message transmitted from another node has been received, operation 940 is performed. In operation 940, the processor of the transmission node determines whether a current NFD is greater than a maximum NFD.

The current NFD is the number of packets required by the other node indicated by the feedback message received in operation 930. The maximum NFD is a maximum number of packets required among all other nodes from which a feedback message has been previously received during the predetermined period of time. The processor compares the number of packets required by the other node with the maximum number of packets.

The other node may receive at least one second packet among the at least one first packet transmitted in operation 905. The number of packets required by the other node is a number of packets additionally required in addition to the at least one second packet to decode at least one third packet received by the other node.

Operations 920 and 930 are repeatedly performed. Through repeated performance of operations 920 and 930, at least one feedback message may be received from one or more other nodes, respectively. Each of the at least one feedback message indicates a number of packets required by each of the one or more other nodes that transmitted the feedback message. The maximum NFD is a maximum value of the numbers of packets required among all of the one or more other nodes.

Before operation 910 is performed, the maximum NFD may be set to be a predetermined value. The predetermined value may be 0. The maximum NFD may be a maximum value among the numbers of the packets required by the one or more other nodes and the predetermined value. For example, if the predetermined value is set to 0 and two feedback messages indicating numbers of packets required by two other nodes are 3 and 5 are received from the other nodes, the maximum NFD may be 5. As another example, if the predetermined value is set to 4 and two feedback messages indicating numbers of packets required by two other nodes are 1 and 3 are received from the other nodes, the maximum NFD may be 4.

The maximum number of packets may be a total number of additional packets previously transmitted by the transmission node during the predetermined period. The maximum number of packets may be a threshold value used to determine whether the transmission node is to transmit additional packets.

In a case in which the number of packets required by the other node is greater than the maximum number of packets, operation 950 is performed.

In a case in which the number of packets required by the other node is less than or equal to the maximum number of packets, operation 910 is repeated. The number of packets required by the other node being less than or equal to the maximum number of packets indicates that additional packets greater than the number of packets required by the other node were previously transmitted (through multicast transmission) to the at least one reception node. Thus, transmission of additional packets is unnecessary.

When the number of packets required by the other node is greater than the maximum number of packets, the communication unit of the transmission node transmits at least one additional packet in operation 950. The at least one additional packet transmitted in operation 950 may be referred to as at least one fourth packet.

The number of additional packets to be transmitted is a difference between the number of packets required by the other node and the maximum number of packets. The number of additional packets to be transmitted may be greater than or equal to the difference between the number of packets required by the other node and the maximum number of packets. The processor may determine the number of the additional packets based on 1) the difference between the number of packets required by the other node and the maximum number of packets, 2) a packet loss rate of the network, and 3) a predetermined value.

In operation 960, the processor of the transmission node updates the maximum NFD. The updated maximum NFD is a total number of additional packets transmitted by the transmission node.

The processor may increase the maximum number of packets by the number of the at least one additional packet transmitted in operation 950. The processor may update the maximum number of packets with the number of packets required by the other node.

After operation 960 is performed, operation 910 is repeated.

Through operations 910 through 960, the transmission node may await a feedback message during the predetermined period of time.

When the delayed response time is less than or equal to 0, the communication unit of the transmission node transmits at least one additional packet in operation 970.

The at least one additional packet transmitted in operation 970 may be referred to as at least one fifth packet.

When a feedback message is not received from another node within the predetermined period of time, that is, the delayed response time, the communication unit transmits at least one additional packet. A number of the at least one additional packet may be equal to the maximum number of packets.

For example, in a case in which the communication unit of the transmission node receives a feedback message from the reception node before operation 910 is performed, the number of packets required by the reception node may be set as an initial value of the maximum number of packets.

In contrast to FIG. 9, when the initial value of the maximum number of packets is 0, operation 970 may not be performed and the communication method of the transmission node may be terminated.

As described above, the transmission node may not respond to all feedback messages of the at least one reception node. The transmission node may determine whether additional packets are to be transmitted in response to a request from the reception node based on a number of previously transmitted additional packets or a number of additional packets to be transmitted after the delayed response time has elapsed. A response of the transmission node may be eliminated based on an NFD. The elimination may be performed based on a block unit. The elimination may be performed on packets having the same ID or coded frames having the same block ID.

As described with reference to FIGS. 1 through 8, coded frames for each of at least one block may be transmitted. A coded frame may have a block ID to indicate a block to which the coded frame belongs. The at least one first packet received by the reception node in operation 905, the at least one fourth packet received by the reception node in operation 950, and the at least one fifth packet received by the reception node in operation 970 may have the same ID. The same ID may be a block ID. Through IDs, received packets may be classified based on a block unit. Through the classification, the processor of the reception node may reconstruct original frames or original packets for each block.

As described with reference to FIGS. 1 through 8, the at least one first packet, the at least one second packet, the at least one third packet, the at least one fourth packet, and the at least one fifth packet may be encoded by network coding. The at least one first packet may include information on a minimum number of packets required to decode the at least one first packet. This is also applicable to the at least one second packet, the at least one third packet, the at least one fourth packet, and the at least one fifth packet. For example, the at least one second packet may include information on a minimum number of packets required to decode the at least one second packet.

The examples described above are applicable, for example, to a terminal, an access point (AP), a router, and a set-top box having a network function, but are not limited thereto.

The communication unit 710, the processor 720, and the storage unit 730 in FIG. 7 that perform the various operations described with respect to FIGS. 1 through 9 may be implemented using one or more hardware components, one or more software components, or a combination of one or more hardware components and one or more software components.

A hardware component may be, for example, a physical device that physically performs one or more operations, but is not limited thereto. Examples of hardware components include resistors, capacitors, inductors, power supplies, frequency generators, operational amplifiers, power amplifiers, low-pass filters, high-pass filters, band-pass filters, analog-to-digital converters, digital-to-analog converters, and processing devices.

A software component may be implemented, for example, by a processing device controlled by software or instructions to perform one or more operations, but is not limited thereto. A computer, controller, or other control device may cause the processing device to run the software or execute the instructions. One software component may be implemented by one processing device, or two or more software components may be implemented by one processing device, or one software component may be implemented by two or more processing devices, or two or more software components may be implemented by two or more processing devices.

A processing device may be implemented using one or more general-purpose or special-purpose computers, such as, for example, a processor, a controller and an arithmetic logic unit, a digital signal processor, a microcomputer, a field-programmable array, a programmable logic unit, a microprocessor, or any other device capable of running software or executing instructions. The processing device may run an operating system (OS), and may run one or more software applications that operate under the OS. The processing device may access, store, manipulate, process, and create data when running the software or executing the instructions. For simplicity, the singular term "processing device" may be used in the description, but one of ordinary skill in the art will appreciate that a processing device may include multiple processing elements and multiple types of processing elements. For example, a processing device may include one or more processors, or one or more processors and one or more controllers. In addition, different processing configurations are possible, such as parallel processors or multi-core processors.

A processing device configured to implement a software component to perform an operation A may include a processor programmed to run software or execute instructions to control the processor to perform operation A. In addition, a processing device configured to implement a software component to perform an operation A, an operation B, and an operation C may have various configurations, such as, for example, a processor configured to implement a software component to perform operations A, B, and C; a first processor configured to implement a software component to perform operation A, and a second processor configured to implement a software component to perform operations B and C; a first processor configured to implement a software component to perform operations A and B, and a second processor configured to implement a software component to perform operation C; a first processor configured to implement a software component to perform operation A, a second processor configured to implement a software component to perform operation B, and a third processor configured to implement a software component to perform operation C; a first processor configured to implement a software component to perform operations A, B, and C, and a second processor configured to implement a software component to perform operations A, B, and C, or any other configuration of one or more processors each implementing one or more of operations A, B, and C. Although these examples refer to three operations A, B, C, the number of operations that may implemented is not limited to three, but may be any number of operations required to achieve a desired result or perform a desired task.

Software or instructions for controlling a processing device to implement a software component may include a computer program, a piece of code, an instruction, or some combination thereof, for independently or collectively instructing or configuring the processing device to perform one or more desired operations. The software or instructions may include machine code that may be directly executed by the processing device, such as machine code produced by a compiler, and/or higher-level code that may be executed by the processing device using an interpreter. The software or instructions and any associated data, data files, and data structures may be embodied permanently or temporarily in any type of machine, component, physical or virtual equipment, computer storage medium or device, or a propagated signal wave capable of providing instructions or data to or being interpreted by the processing device. The software or instructions and any associated data, data files, and data structures also may be distributed over network-coupled computer systems so that the software or instructions and any associated data, data files, and data structures are stored and executed in a distributed fashion.

For example, the software or instructions and any associated data, data files, and data structures may be recorded, stored, or fixed in one or more non-transitory computer-readable storage media. A non-transitory computer-readable storage medium may be any data storage device that is capable of storing the software or instructions and any associated data, data files, and data structures so that they can be read by a computer system or processing device. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, or any other non-transitory computer-readable storage medium known to one of ordinary skill in the art.

Functional programs, codes, and code segments for implementing the examples disclosed herein can be easily constructed by a programmer skilled in the art to which the examples pertain based on the drawings and their corresponding descriptions as provided herein.

While this disclosure includes specific examples, it will be apparent to one of ordinary skill in the art that various changes in form and details may be made in these examples without departing from and scope of the claims. Suitable results may be achieved if the described techniques are performed in a different order, and/or if components in a described system, architecture, device, or circuit are combined in a different manner, and/or replaced or supplemented by other components or their equivalents. Therefore, the scope of the protection sought is defined not by the detailed description, but by the claims.

## Claims

1. A communication method performed by a reception node (320, 330, 420, 430, 440, 450, 700) in a network, the method comprising:
receiving (805) at least one first packet transmitted from a transmission node (310, 410, 700);
receiving (820, 830) a first feedback message related to packet reception of the at least one first packet from another node (320, 330, 420, 430, 440, 450, 700) in the network, the first feedback message comprising information on a number of packets required by the other node to decode the at least one first packet;
comparing (840) the number of packets required by the other node with a number of packets required by the reception node, wherein the number of packets required by the reception node is a minimum number of packets additionally required to decode the received at least one first packet;
transmitting (845) to the transmission node, a second feedback message comprising information on the number of packets required by the reception node in response to the number of packets required by the reception node being greater than the number of packets required by the other node, wherein the second feedback message includes a packet error rate; and
in response to the transmitting of the second feedback message, receiving from the transmission node additional packets in addition to the number of packets required by the reception node based on the packet error rate.

2. The method of claim 1, further comprising:
awaiting (810) the first feedback message during a predetermined period of time; and transmitting (855) the second feedback message in response to the first feedback message not being received within the predetermined period of time.

3. The method of claim 2, wherein the at least one first packet is multicast from the transmission node to the reception node, or each of the at least one first packet comprises a same identifier, ID, or information on a minimum number of packets required to decode the received at least one first packet.

4. The method of claim 2, wherein the received at least one first packet is encoded by network coding; and
the number of packets required by the reception node is one of a minimum number of packets additionally required to decode the received at least one first packet encoded by network coding, and a number of at least one second packet encoded by the network coding and additionally required to decode the received at least one first packet encoded by the network coding.

5. A reception node (700) comprising:
a communication unit (710) configured to receive at least one first packet transmitted from a transmission node; and to receive any first feedback message transmitted by any other node in a network, the first feedback message requesting additional packets additionally required by the other node to decode the received at least one first packet; and
a processor (720) configured to generate a second feedback message requesting an additional number of packets required by the node in response to the communication unit not receiving any first feedback message requesting a number of additional packets that is greater than or equal to the additional number of packets required by the node, wherein the number of packets required by the reception node is a minimum number of packets additionally required to decode the received at least one first packet and wherein the second feedback message includes a packet error rate;
wherein the communication unit is further configured to transmit the second feedback message to the transmission node, and to receive from the transmission node additional packets in addition to the number of packets required by the reception node based on the packet error rate.

6. The node of claim 5, wherein the processor is further configured to generate the second feedback message based only on any first feedback message received during a predetermined period of time; and
the communication unit is further configured to transmit the second feedback message after the predetermined period of time has elapsed, or to receive at least one second packet from a transmission node in the network; wherein the additional number of packets required by the node is an additional number of packets required to decode the at least one first packet,
wherein the at least one first packet is part of a set of first packets obtained by network coding a set of original packets;
a number of first packets in the set of first packets is greater than a number of original packets in the set of original packets; and
a number of first packets of the least one first packet received by the communication unit plus the additional number of packets required to decode the at least one first packet is less than the number of first packets in the set of first packets.

7. The node of claim 5, wherein the processor is further configured to determine a number of additional packets to be transmitted in response to a number of additional packets requested by any feedback message received by the communication unit exceeding a maximum number of packets, wherein the communication unit is further configured to transmit the determined number of additional packets to be transmitted.

8. The node of claim 7, wherein the processor is further configured to determine the number of additional packets to be transmitted based only on any feedback message received by the communication unit during a predetermined period of time; and
the communication unit is further configured to transmit the number of additional packets to be transmitted after the predetermined period of time has elapsed.

9. The node of claim 7, wherein the maximum number of packets is a total number of additional packets that have previously been transmitted by the communication unit in response to at least one feedback message received by the communication unit, and/or
the node further comprising updating the maximum number of packets to include the determined number of additional packets transmitted by the communication unit.

10. A non-transitory computer-readable storage medium storing a program comprising instructions which, when the program is executed by a computer, cause the J Z computer to perform the method of one of claims 1 to 4.

## Patentansprüche

1. Ein Kommunikationsverfahren, das von einem Empfangsknoten (320, 330, 420, 430, 440, 450, 700) in einem Netzwerk durchgeführt wird, wobei das Verfahren umfasst:
Empfangen (805) von mindestens einem ersten Paket, das von einem Übertragungsknoten (310, 410, 700) übertragen wird;
Empfangen (820, 830) von einer ersten Rückmeldungsnachricht, die sich auf den Paketempfang des mindestens einen ersten Pakets von einem anderen Knoten (320, 330, 420, 430, 440, 450, 700) im Netzwerk bezieht, wobei die erste Rückmeldungsnachricht Informationen über eine Anzahl von Paketen enthält, die von dem anderen Knoten benötigt werden, um das mindestens eine erste Paket zu entschlüsseln;
Vergleichen (840) der Anzahl von Paketen, die von dem anderen Knoten benötigt werden, mit einer Anzahl von Paketen, die von dem Empfangsknoten benötigt werden, wobei die Anzahl von Paketen, die von dem Empfangsknoten benötigt wird, eine Mindestanzahl von Paketen ist, die zusätzlich benötigt wird, um das empfangene mindestens eine erste Paket zu entschlüsseln;
Übertragen (845) an den Übertragungsknoten einer zweiten Rückmeldungsnachricht, die Informationen über die Anzahl von Paketen umfasst, die von dem Empfangsknoten in Reaktion darauf benötigt werden, dass die Anzahl von Paketen, die von dem Empfangsknoten benötigt werden, größer ist als die Anzahl von Paketen, die von dem anderen Knoten benötigt werden, wobei die zweite Rückmeldungsnachricht eine Paketfehlerrate enthält; und
als Reaktion auf das Übertragen der zweiten Rückmeldungsnachricht, Empfangen von zusätzlichen Paketen vom Übertragungsknoten zusätzlich zu der Anzahl von Paketen, die der Empfangsknoten aufgrund der Paketfehlerrate benötigt.

2. Das Verfahren nach Patentanspruch 1, weiter umfassend:
Warten (810) auf die erste Rückmeldungsnachricht während einer vorbestimmten Zeitspanne; und Übertragen (855) der zweiten Rückmeldungsnachricht als Reaktion darauf, dass die erste Rückmeldungsnachricht nicht innerhalb der vorbestimmten Zeitspanne empfangen wurde.

3. Das Verfahren nach Patentanspruch 2, wobei das mindestens eine erste Paket vom Übertragungsknoten zum Empfangsknoten im Multicast-Verfahren übertragen wird oder jedes des mindestens einen ersten Pakets eine gleiche Kennung, ID oder Informationen über eine Mindestanzahl von Paketen umfasst, die erforderlich sind, um das empfangene mindestens eine erste Paket zu entschlüsseln.

4. Das Verfahren nach Patentanspruch 2, wobei das empfangene mindestens eine erste Paket durch Netzkodierung kodiert wird; und
die Anzahl von Paketen, die vom Empfangsknoten benötigt wird, eine Mindestanzahl von Paketen ist, die zusätzlich benötigt wird, um das empfangene mindestens eine erste Paket zu entschlüsseln, das durch die Netzkodierung kodiert wurde, oder eine Anzahl von mindestens einem zweiten Paket, das durch die Netzkodierung kodiert wurde und zusätzlich benötigt wird, um das empfangene mindestens eine erste Paket zu entschlüsseln, das durch die Netzkodierung kodiert wurde.

5. Ein Empfangsknoten (700) umfassend:
eine Kommunikationseinheit (710), die so konfiguriert ist, dass sie mindestens ein erstes Paket, das von einem Übertragungsknoten übertragen wird, empfängt; und, dass sie jede erste Rückmeldungsnachricht empfängt, die von einem beliebigen anderen Knoten in einem Netzwerk übertragen wird, wobei die erste Rückmeldungsnachricht zusätzliche Pakete anfordert, die zusätzlich für den anderen Knoten erforderlich sind, um das empfangene mindestens eine erste Paket zu entschlüsseln; und
einen Prozessor (720), der so konfiguriert ist, dass er als Reaktion darauf, dass die Kommunikationseinheit keine erste Rückmeldungsnachricht empfängt, die eine Anzahl von zusätzlichen Paketen anfordert, die größer oder gleich der zusätzlichen Anzahl von Paketen ist, die von dem Knoten benötigt wird, eine zweite Rückmeldungsnachricht erzeugt, die eine zusätzliche Anzahl von Paketen anfordert, die von dem Knoten benötigt wird, wobei die Anzahl von Paketen, die vom Empfangsknoten benötigt wird, eine Mindestanzahl von Paketen ist, die zusätzlich benötigt wird, um das empfangene mindestens eine erste Paket zu entschlüsseln, und wobei die zweite Rückmeldungsnachricht eine Paketfehlerrate enthält;
wobei die Kommunikationseinheit ferner so konfiguriert ist, dass sie die zweite Rückmeldungsnachricht an den Übertragungsknoten überträgt und von dem Übertragungsknoten zusätzliche Pakete zusätzlich zu der Anzahl von Paketen empfängt, die der Empfangsknoten auf der Grundlage der Paketfehlerrate benötigt.

6. Der Knoten nach Patentanspruch 5, wobei der Prozessor ferner so konfiguriert ist, dass er die zweite Rückmeldungsnachricht nur auf der Grundlage jeder ersten Rückmeldungsnachricht erzeugt, die während einer vorgegebenen Zeitspanne empfangen wurde; und
die Kommunikationseinheit ferner so konfiguriert ist, dass sie die zweite Rückmeldungsnachricht überträgt, nachdem die vorbestimmte Zeitspanne verstrichen ist, oder dass sie mindestens ein zweites Paket von einem Übertragungsknoten in dem Netzwerk empfängt; wobei die zusätzliche Anzahl von Paketen, die von dem Knoten benötigt wird, eine zusätzliche Anzahl von Paketen ist, die benötigt wird, um das mindestens eine erste Paket zu entschlüsseln,
wobei das mindestens eine erste Paket Teil eines Satzes von ersten Paketen ist, die durch Netzwerkcodierung eines Satzes von Originalpaketen erhalten wurden;
eine Anzahl von ersten Paketen in dem Satz von ersten Paketen größer ist als eine Anzahl von Originalpaketen in dem Set von Originalpaketen; und
eine Anzahl von ersten Paketen des mindestens einen ersten Pakets, das von der Kommunikationseinheit zuzüglich der zusätzlichen Anzahl von Paketen, die erforderlich ist, um das mindestens eine erste Paket zu entschlüsseln, empfangen wurde, geringer ist als die Anzahl der ersten Pakete in dem Set der ersten Pakete.

7. Der Knoten nach Patentanspruch 5, wobei der Prozessor ferner so konfiguriert ist, dass er als Reaktion auf eine in einer von der Kommunikationseinheit empfangenen Rückmeldungsnachricht angeforderten Anzahl von zusätzlichen Paketen eine Anzahl von zu übertragenden zusätzlichen Paketen bestimmt, die eine maximale Anzahl von Paketen überschreitet, wobei die Kommunikationseinheit ferner konfiguriert ist, die bestimmte Anzahl von zusätzlichen zu übertragenden Paketen zu übertragen.

8. Der Knoten nach Patentanspruch 7, wobei der Prozessor ferner so konfiguriert ist, dass er die Anzahl der zu übertragenden zusätzlichen Pakete nur auf der Grundlage einer Rückmeldungsnachricht bestimmt, die von der Kommunikationseinheit während einer vorgegebenen Zeitspanne empfangen wurde; und
die Kommunikationseinheit ferner so konfiguriert ist, dass sie die Anzahl der zu übertragenden zusätzlichen Pakete nach Ablauf der vorgegebenen Zeitspanne überträgt.

9. Der Knoten nach Patentanspruch 7, wobei die maximale Anzahl von Paketen eine Gesamtzahl von zusätzlichen Paketen ist, die zuvor von der Kommunikationseinheit als Reaktion auf mindestens eine von der Kommunikationseinheit empfangene Rückmeldungsnachricht übertragen werden, und/oder
wobei der Knoten ferner eine Aktualisierung der maximalen Anzahl von Paketen umfasst, um die bestimmte Anzahl von zusätzlichen Paketen, die von der Kommunikationseinheit übertragen werden, einzubeziehen.

10. Ein nicht vorübergehendes computerlesbares Speichermedium, das ein Programm speichert, das Befehle umfasst, die, wenn das Programm von einem Computer ausgeführt wird, den Computer veranlassen, das Verfahren nach einem der Patentansprüche 1 bis 4 durchzuführen.

## Revendications

1. Procédé de communication réalisée par un nœud de réception (320, 330, 420, 430, 440, 450, 700) dans un réseau, le procédé comprenant les opérations suivantes:
recevoir (805) au moins un premier paquet transmis à partir d'un nœud de transmission (310, 410, 700) ;
recevoir (820, 830) un premier message de retour relatif à la réception d'au moins un premier paquet provenant d'un autre nœud (320, 330, 420, 430, 440, 450, 700) du réseau, le premier message de retour comprenant des informations sur un certain nombre de paquets requis par l'autre nœud pour décoder au moins un premier paquet;
comparer (840) le nombre de paquets requis par l'autre nœud avec un nombre de paquets requis par le nœud de réception, le nombre de paquets requis par le nœud de réception étant un nombre minimum de paquets requis en plus pour décoder le premier paquet reçu au moins;
transmettre (845) au nœud de transmission, un second message de retour comprenant des informations sur le nombre de paquets requis par le nœud de réception en réponse au fait que le nombre de paquets requis par le nœud de réception est supérieur au nombre de paquets requis par l'autre nœud, dans lequel le second message de retour comprend un taux d'erreur de paquet; et
en réponse à la transmission du second message de retour, recevoir du nœud de transmission des paquets supplémentaires en plus du nombre de paquets requis par le nœud de réception sur la base du taux d'erreur des paquets.

2. Procédé selon la revendication 1, comprenant en outre les opérations suivantes:
attendre (810) le premier message de retour pendant une période de temps prédéterminée; et
transmettre (855) le second message de retour en réponse au fait que le premier message de retour n'a pas été reçu dans la période de temps prédéterminée.

3. Procédé selon la revendication 2, dans lequel ledit au moins un premier paquet est multidiffusé du nœud de transmission au nœud de réception, ou chacun dudit au moins un premier paquet comprend un même identifiant, ID, ou desdites informations sur un nombre minimum de paquets nécessaires pour décoder ledit au moins un premier paquet reçu.

4. Procédé selon la revendication 2, dans lequel le premier paquet reçu au moins est codé par codage de réseau; et
le nombre de paquets requis par le nœud de réception est l'un des nombres minimums de paquets requis en plus pour décoder le premier paquet reçu au moins codé par le codage du réseau, et un nombre d'au moins un second paquet codé par le codage du réseau et requis en plus pour décoder le premier paquet reçu au moins codé par le codage du réseau.

5. Nœud de réception (700) comprenant:
une unité de communication (710) configurée pour recevoir au moins un premier paquet transmis par un nœud de transmission; et pour recevoir tout premier message de retour transmis par tout autre nœud d'un réseau, le premier message de retour demandant des paquets supplémentaires requis en plus par l'autre nœud pour décoder ledit au moins premier paquet; et
un processeur (720) configuré pour générer un second message de retour demandant un nombre supplémentaire de paquets requis par le nœud en réponse à l'unité de communication ne recevant pas de premier message de retour demandant un nombre de paquets supplémentaires qui est supérieur ou égal au nombre supplémentaire de paquets requis par le nœud, dans lequel le nombre de paquets requis par le nœud de réception est un nombre minimum de paquets requis en plus pour décoder le premier paquet reçu au moins et dans lequel le second message de retour comprend un taux d'erreur de paquet;
dans lequel l'unité de communication est en outre configurée pour transmettre le second message de retour au nœud de transmission et pour recevoir du nœud de transmission des paquets supplémentaires en plus du nombre de paquets requis par le nœud de réception sur la base du taux d'erreur des paquets.

6. Noeud selon la revendication 5, dans lequel le processeur est en outre configuré pour générer le second message de retour sur la base uniquement de tout premier message de retour reçu pendant une période de temps prédéterminée; et
l'unité de communication est en outre configurée pour transmettre le second message de retour après que la période de temps prédéterminée se soit écoulée, ou pour recevoir au moins un second paquet d'un nœud de transmission dans le réseau; dans lequel le nombre supplémentaire de paquets requis par le nœud est un nombre supplémentaire de paquets requis pour décoder ledit au moins un premier paquet,
dans lequel le premier paquet au moins fait partie d'un ensemble de premiers paquets obtenus par codage en réseau d'un ensemble de paquets originaux;
un nombre de premiers paquets dans l'ensemble des premiers paquets est supérieur à un nombre de paquets originaux dans l'ensemble des paquets originaux; et
un nombre de premiers paquets dudit au moins un premier paquet reçu par l'unité de communication plus le nombre supplémentaire de paquets requis pour décoder ledit au moins premier paquet est inférieur au nombre de premiers paquets de l'ensemble des premiers paquets.

7. Nœud selon la revendication 5, dans lequel le processeur est en outre configuré pour déterminer un nombre de paquets supplémentaires à transmettre en réponse à un nombre de paquets supplémentaires demandé par tout message de retour reçu par l'unité de communication dépassant un nombre maximum de paquets, dans lequel l'unité de communication est en outre configurée pour transmettre le nombre déterminé de paquets supplémentaires à transmettre.

8. Nœud selon la revendication 7, dans lequel le processeur est en outre configuré pour déterminer le nombre de paquets supplémentaires à transmettre en se fondant uniquement sur tout message de retour reçu par l'unité de communication pendant une période de temps prédéterminée; et
l'unité de communication est en outre configurée pour transmettre le nombre de paquets supplémentaires à transmettre après expiration de la période de temps prédéterminée.

9. Nœud selon la revendication 7, dans lequel le nombre maximum de paquets est un nombre total de paquets supplémentaires qui ont été précédemment transmis par l'unité de communication en réponse à au moins un message de retour reçu par l'unité de communication, et/ou
le nœud comprenant en outre la mise à jour du nombre maximum de paquets pour inclure le nombre déterminé de paquets supplémentaires transmis par l'unité de communication.

10. Support de stockage non transitoire lisible par ordinateur qui stocke un programme comprenant des instructions qui, lorsque le programme est exécuté par un ordinateur, font en sorte que l'ordinateur exécute la procédé selon l'une des revendications 1 à 4.
